Europäisches Patentamt

European Patent Office

Office européen des brevets

(11) Publication number:

**0 331 033**

**A2**

(19)

## (12) EUROPEAN PATENT APPLICATION

(21) Application number: 89103263.3

(51) Int. Cl.⁴: **G06K 15/10 , B41J 3/02**

(22) Date of filing: 24.02.89

(30) Priority: 29.02.88 JP 44618/88

(43) Date of publication of application:
06.09.89 Bulletin 89/36

(84) Designated Contracting States:
DE FR GB

(71) Applicant: **Oki Electric Industry Company, Limited**
**7-12, Toranomon 1-chome Minato-ku**
**Tokyo 105(JP)**

(72) Inventor: **Kohtaroh, Yoshimura Oki Electric Industry Co Ltd.**
**7-12, Toranomon 1-chome Minato-ku**
**Tokyo(JP)**

(74) Representative: **Goddar, Heinz J., Dr. et al**
**FORRESTER & BOEHMERT**
**Widenmayerstrasse 4/I**
**D-8000 München 22(DE)**

(54) **Printing system for dot-matrix printer.**

(57) The present invention relates to a printing system for a dot-matrix printer for enabling to print a dot-matrix character, graphic patterns at the speed n-times (n is more than 2) higher than a normal printing mode as well as enabling to print at the normal speed printing mode by processing a basic dot matrix of the normal printing mode for generating a dot-matrix of n-times speed printing mode. The printing system comprising: a means (4, 15) enabling to drive a print head (1) at a speed n-times higher than a normal driving speed; a dot-matrix generator means (19) for processing the basic dot-matrix to generate a dot-matrix for the n-times speed printing mode in the manner that a non-printing dot is included in the number of at least n-1 in the same row between the printed dot and the next dot to be printed.

According to the present invention, inasmuch as the non-printing dot is included in the number of at least (n-1) during the period between the time when each dot pin of the print head effected the printing and the time when the next printing is effected, whereby high speed printing can be effected.

Fig. 1

BLOCK DIAGRAM EXPLAINING PRINTING SYSTEM OF THE PRESENT INVENTION

## PRINTING SYSTEM FOR DOT-MATRIX PRINTER

The present invention relates to a printing system for a dot-matrix printer, more particularly to a high-speed printing system for the dot-matrix printer.

A printing speed of a dot-matrix printer is regulated by a repetitive cycle time of a dot print head. It is well known that the printing speed can be increased by operating the printer in the manner that the minimum dot space between dots in a lateral direction can be set to be large whereby high speed printing can be effected with the dot print head having the limited numbers of head pins. In view of the known art, the applicant filed the application with the European Patent Office for the invention for the printer enabling to print at a double speed, which has been published under No. 0 160 318 A2. The applicant has further filed Japanese Patent application 62-169846 which discloses a means for effecting high speed printing. According to Japanese Patent Application No. 62-169846, printing at the speed three times higher than normal printing speed (hereafter referred to as three-times speed printng mode) can be achieved by providing a means to change a drive cycle of the dot print head for setting a printing space to be 3/2 column after omitting dots extending to three columns in lateral direction in which two consecutive columns among three columns are set to be one row by ORed among rows while the remaining one column is retained as it is, and executing an operation so that the dot extending to 3/2 dot columns is not printed successively.

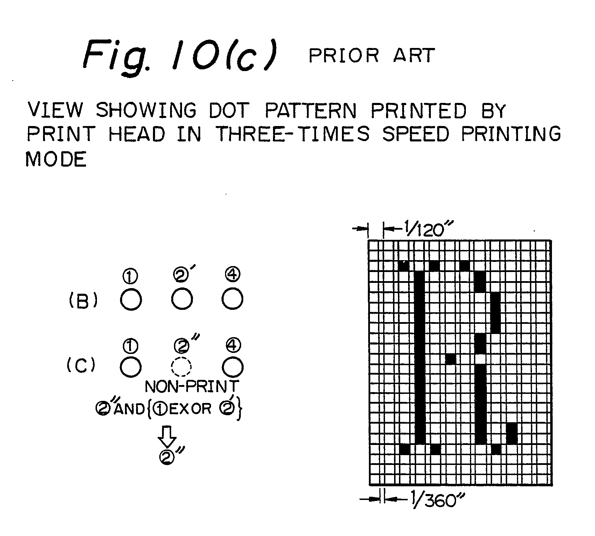

However, according to the prior printing system for the dot- matrix printer since the dot matrix has an arrangement of a unit of 3/2 column, an image resolution becomes 2/3 with respect to a basic dot cycle, which results in deterioration of printing density in case of printing a character obliquely. Resolution of this dot-matrix printer becomes 1/120 inch although it has generally a dot pitch of 1/180 inch. This will be described more in detail with reference to Figs. 10(a), 10(b) and 10(c).

Figs. 10(a), 10(b) and 10(c) are views of assistance in explaining the manner to produce three-times speed printing modes accoridng to the prior art printing system.

Fig. 10(a) shows a printing pattern made by a basic dot-matrix printer. Fig. 10(b) is a view of a printing mode made by a dot-matrix printer reduced to 2/3 in which the printing space is enlarged from 1/180 inch to 1/120 inch. Fig. 10(c) is a printing pattern which was printed at a speed three times higher than a normal printing speed made by the basic dot-matrix printer in which a consecutive printing data are omitted from the same row.

As apparent from the comparison between the printing patterns of Figs. 10(a) and 10 (c), there are gaps in the printing pattern of Fig. 10(c) betwen the columns which are expressed:

1/120 inch - 1/180 inch = 1/360 inch

As a result of the gaps, the printing quality is deteriorated.

Furthermore, there is a problem that the printing pattern is made by a complicated control method.

To overcome the problems of the prior art, the present invention comprises a printing system for a dot-matrix printer for enabling to print a dot-matrix character, graphic patterns at the speed n-times (n is more than 2) higher than a normal printing mode as well as enabling to print at the normal speed printing mode by processing a basic dot matrix of the normal printing mode for generating a dot-matrix of n-times speed printing mode, the printing system comprising: a means (4, 15) enabling to drive a print head (1) at a speed n-times higher than a normal driving speed; a dot-matrix generator means (19) for processing the basic dot-matrix to generate a dot-matrix for the n-times speed printing mode in the manner that a non-printing dot is included in the number of at least n-1 in the same row between the printed dot and the next dot to be printed.

According to the present invention, inasmuch as the non-printing dot is included in the number of at least (n-1) during the period between the time when each dot pin of the print head effected the printing and the time when the next printing is effected, whereby high speed printing can be effected.

The above and other objects, features and advantages of the present invention will become more apparent from the following description taken in conjunction with the accompanying drawings.

Fig. 1 is a block diagram of assistance in explaining a printing system of a dot-matrix printer according to the present invention;

Fig. 2 is a block diagram of a first arithmetic logic means in the printing system of Fig. 1;

Fig. 3 is a view of assistance in explaining the result of operation executed by the first arithmetic logic means of Fig. 2;

Fig. 4 is a block diagram of a second arithmetic logic means in the printing system of Fig. 1;

Fig. 5 is a view of assistance in explaining the result of operation executed by the second arithmetic logic means of Fig. 4;

Fig. 6(a) is a time chart of operation of a print head drive cycle in a normal printing mode;

Fig. 6(b) is a time chart of operation of a print head drive cycle in a three-times speed printing mode;

Fig. 7 is a schematic view of a dot-matrix printer; Fig. 8 is a block diagram of a control circuit of the dot-matrix printer for controlling the dot-matrix printer;

Fig. 9(a) is views showing a print head and a dot pattern printed by the print head in the normal printing mode;

Fig. 9(b) is a view showing a dot pattern printed in the three-times speed printing mode according to the present invention; and

Fig. 10(a), (b) and (c) are views of assistance in explaining the manner to produce three times speed printing mode according to the prior art invention.

An embodiment of the present invention will be described with reference to the attached drawings.

Elements which are common to each figure are denoted at the same numerals.

As the embodiment of the present invention relates to a serial dot-matrix impact printer (hereafter referred to as dot-matrix printer) provided with a print head having print wires of 24 pins in a vertical first column for enabling to print a dot-matrix character, a graphic pattern at a speed three times higher than that of a normal printing speed.

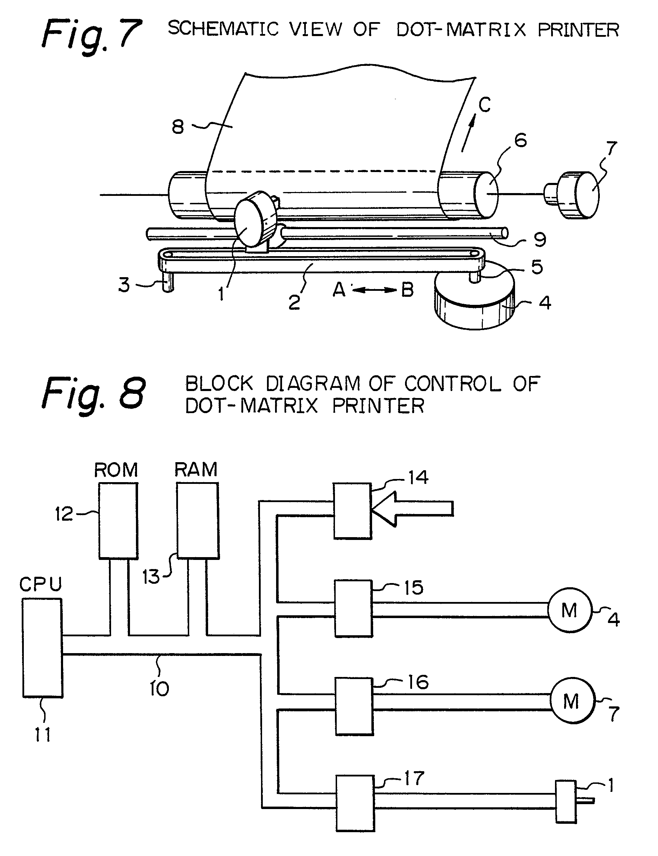

A mechanism and a control circuit of the dot-matrix printer will be first described with reference to Figs. 7 and 8.

Fig. 7 is a schematic view of the dot-matrix printer.

A print head 1 fixed to a belt 2 moves in the directions of the arrows A, B along a shaft 9 by a reciprocal movement of the belt 2 in the directions of the arrows A, B. The belt 2 is entrained around a roller 3 and a rotary shaft 5 of a space motor 4 for changing the rotary movement of the space motor 4 to the reciprocal movement of the print head 1. A line feed motor 7 (hereafter referred to as LF motor) rotates a platen 6 so that a print paper 8 wound around the platen 6 is fed to the direction of the arrow C to effect a new line feeding.

Fig. 8 is a block diagram of a control circuit of the dot-matrix printer for contolling the dot-matrix printer.

A microprocessor 1 (hereafter referred to as CPU 11) receives characters, a graphic pattern, control data from a master control device (not shown) through an I/O port 14 for controlling the control circuit as a whole. A read only memory 12 (hereafter referred to as ROM) stores printing control program and image data in a basic dot-matrix pattern such as a dot-matrix character, graphic patterns, etc. A random access memory 13 (hereafter referred to as RAM 13) stores temporarily data received from the master control device (not shown) through the I/O port 14, or n-times speed printing mode data (described later). A space motor driver 15, an LF motor driver 16, and a print head driver 17 drive the space motor 4, the LF motor 7, and the print head 1 under the control of the CPU 11. The space motor 4 is controlled by switching a switch of an operation unit (not shown) or on the basis of switching command from the master control device for driving the printer at the normal printing speed (hereafter referred to as normal printing mode) or at the speed of n-times higher than the the normal printing speed (hereafter referred to as n-times speed printing mode). A common bus 10 connect the CPU 11, the ROM 12, the RAM 13, the I/O port 14, the space motor driver 15, the LF motor driver 16, and the printing driver 17.

A means for generating data of the n-times speed printing mode, which is a principal portion of the present invention will be described hereafter.

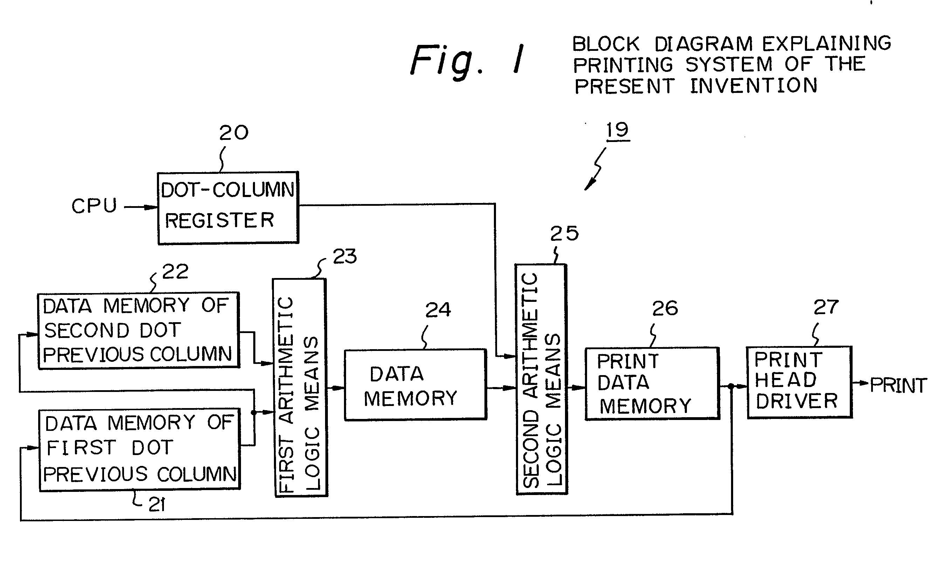

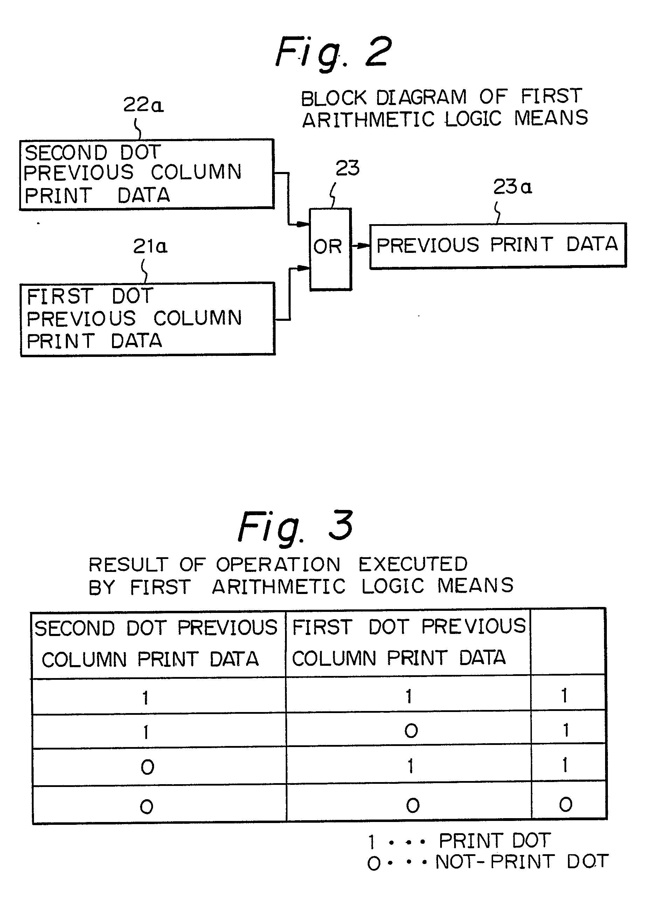

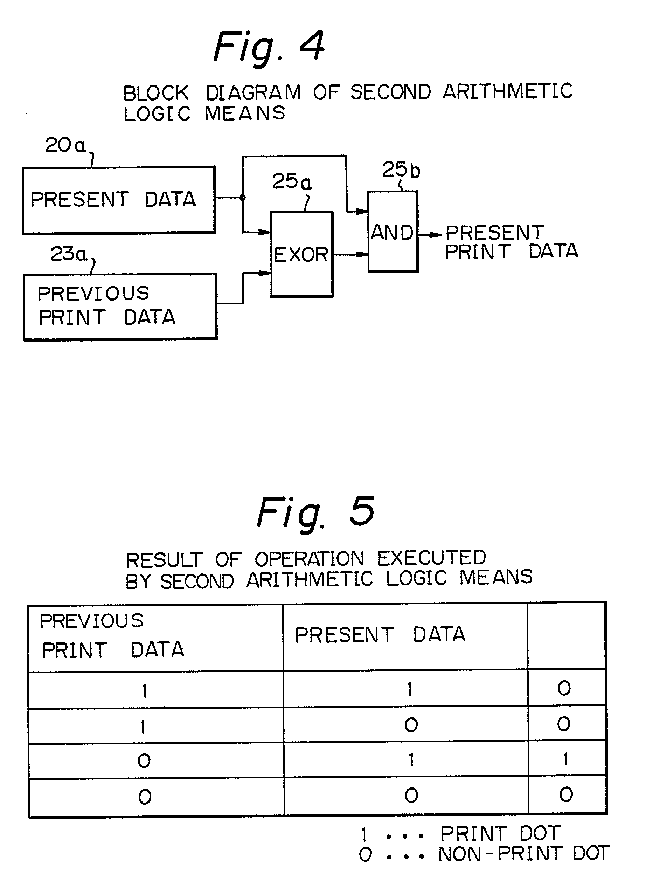

Fig. 1 is a block diagram of assistance in explaining a printing system of a dot-matrix printer according to the present invention, which comprises a CPU, a ROM, and a RAM. Fig. 2 is a block diagram of a first arithmetic logic means as one of processing means of Fig. 1. Fig. 4 is a block diagram of a second arithmetic logic means as another processing means of Fig. 1.

In Fig. 1, printing data of a basic dot-matrix supplied from the CPU 11 to be printed and corresponding to the print head 1 are stored in a dot column register 20 as present print data for a present vertical column of 24 dots.

Previous print data composed of vertrical column of 24 dots and printed in a column just before the present column are stored in a data memory 21 of the first dot previous column (hereafter referred to a first dot previous column) while previous print data composed of vertical column of 24 dots and printed in a column just before the second dot previous column (hereafter referred to as second dot previous column) are stored in a data memory 22 of the second dot previous column. The data memories 21, 22 constitute shifting means. The data stored in the data memory 21 of the first dot previous column and the data stored in the data memory 22 of the second dot previous column are subjected to an operation as data per each pin of the print head 1 by a first arithmetic logic means 23, shifted to a data memory 24, and stored in the data memory 24 as a previous print data before printing. The data stored in the data memory 24 and the data stored in the dot-matrix register 20 which is the previous print data of the basic dot-matrix are subjected to an operation by a second arithmetic logic means 25 and the resultant operation are stored in a print data memory 26 as three-times speed printing mode data. On the basis of the three-times speed printing mode, the print head is driven by the print head driver 17 and printed at high speed than the normal printing mode. The print data of the three-times speed printing mode stored in the print data memory 26 is supplied to the data memory 21 of the first dot previous column for operating the next dot column.

Fig. 2 is a block diagram of the first arithmetic logic means 23 of Fig. 1. The first arithmetic logic means 23 is one of 24 OR means for detecting presence of data to be printed in one of or both of a second dot previous column print data 22a composed of 24 dots and a first dot previous column print data 21a composed of 24 dots respectively corresponding to each pin of the print head 1.

Fig. 3 is a view of assistance in explaining a result of the operation executed by the first arithmetic logic means 23.

Fig. 4 is a block diagram of the second arithmetic logic means 25 shown in Fig. 1. The second arithmetic logic means 25 executes the operation in the manner that the data of the dot pins are non-printing data regardless of the content of the data of the dot column register 20 provided that the previous print data 23a being the result of the operation of the first arithmetic logic means 23 is printed while the data of the dot pins are data to be printed as the print data stored in the dot column register 20 provided that the previous data 23a being the result of the operation of the first arithmetic logic means 23 is not printed.

As illustrated in the block diagram of Fig. 4, the second arithmetic logic means 25 comprises 24 exclusive OR means 25a and 24 AND means 25b (refer to Fig. 2 of the European Patent Publication No. 0160318 A2).

Fig. 5 is a view of assistance in explaining the result of operation executed by the second arithmetic logic means 25.

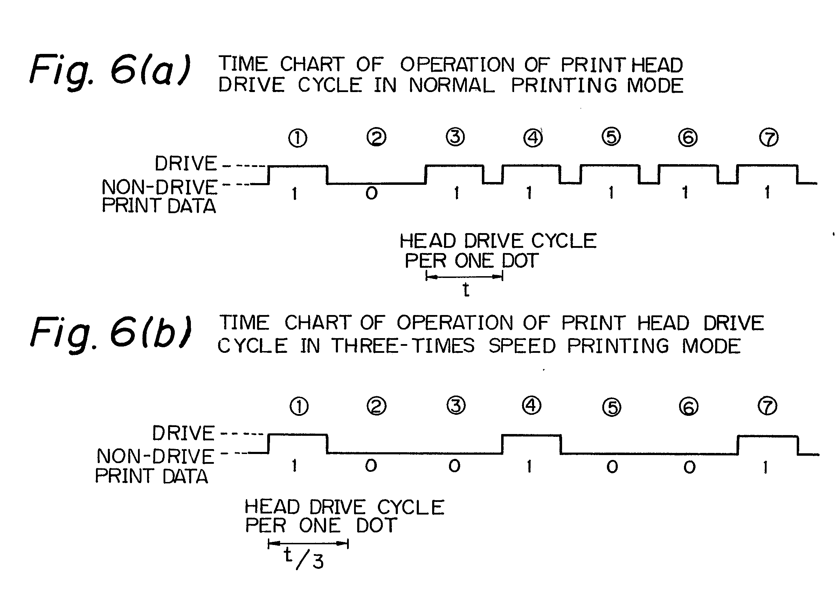

Figs. 6(a), 6(b) are time charts respectively showing operations of the print head drive cycles in the normal printing mode and the three-times speed printing mode.

Fig. 6(a) is a time chart showng the operation of the drive cycle of the arbitrary head pin in the normal printing mode in which the head pin is driven at fourth dot in succession to an operation driven at third dot. Hence, the period for printing one dot becomes the print head drive cycle t. On the other hand, Fig. 6(b) is a time chart showing the operation of the drive cycle of the head pin employing the present invention in the head pin of Fig. 6(a) for enabling to print at the three-times speed printing mode. Accoridng to the drive cycle of the head pin in Fig. 6(b), since two dots following the driven dot are surely not printed, the drive cycle per one dot becomes 1/3 t compared with that of Fig. 6(a) for enabling to print at the speed three-times higher than that of Fig. 6(a).

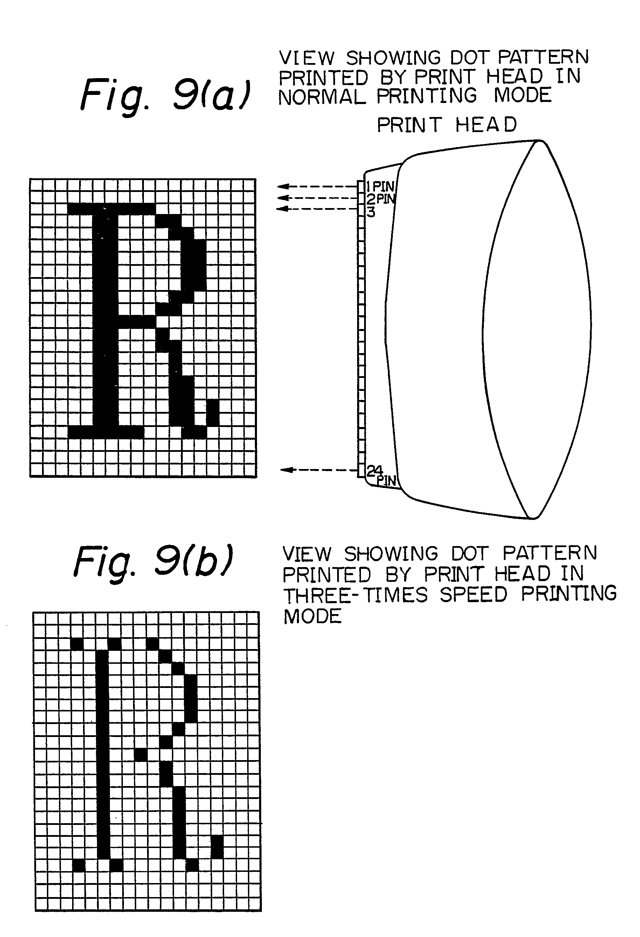

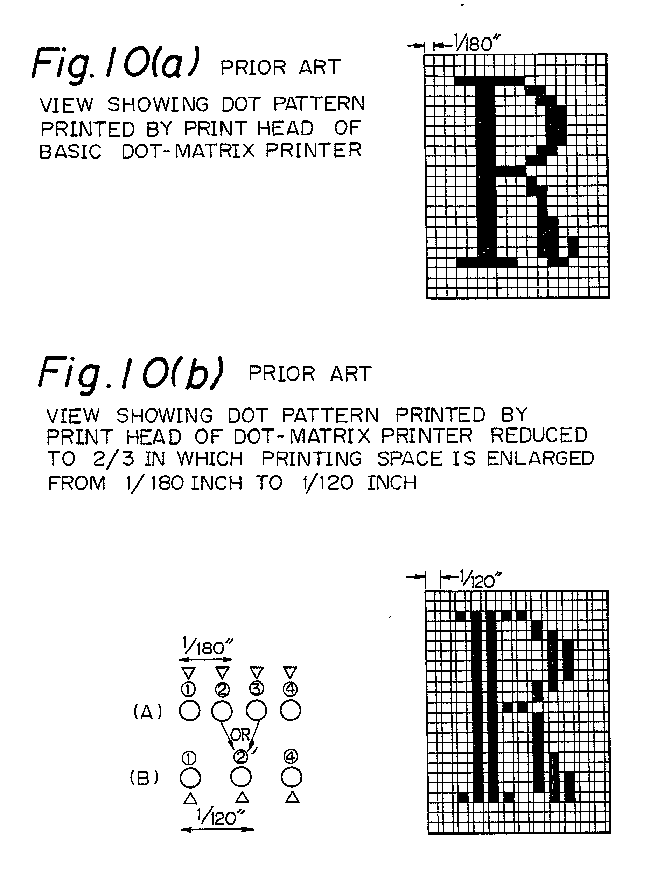

Fig. 9(a), (b) and (c) are views of assistance in explaining the three-times printing speed mode according to the present invention.

Fig. 9(a) shows a print head and a dot pattern printed by the print head in the normal printing mode. Fig. 9(b) is a dot pattern printed by the three-times speed printing mode. According to the present invention, although the printing wire composed of 24 pins are provided at a vertical column but the dot pattern can be prepared in the same principle if a buffer is provided in the print driver even if the dot pattern is staggered in two vertical columns.

Furthermore, the present invention has been explained regarding the three-times speed printing mode but can be employed in the n-times speed printing mode provided that the first dot previous column data memory, the second dot previous column data memory, ... (n-1) previous column data memory are provided as the shifting means.

As explained in detail, the dot-matrix printer according to the present invention enables to print the dot-matrix characters, graphic patterns, etc. at the speed n-times higher than a normal printing mode as well as enabling to print at the normal printing mode by processing the basic dot-matrix of the normal printing mode and characterized in including the non-printing dot in the number of at least (n-1) during the period between the time when each dot pin of the print head effected the printing and the time when the next printing is effected, whereby high speed printing can be effected.

Furthermore, the printing system for the dot-matrix printer according to the present invention can print at the basic dot-matix as a dot unit differing from the dotmatrix in the dot of 3/2 column unit so that there does not occur any gap between the columns as illustrated in Fig. 10(c) whereby the printing quality is improved.

Although the invention has been described in its preferred form with a certain degree of particularity, it is to be understood that many variations and changes are possible in the invention without departing from the scope thereof.

The features disclosed in the foregoing description, in the claims and/or in the accompanying drawings may, both separately and in any combination thereof, be material for realising the invention in diverse forms thereof.

## Claims

1. A printing system for a dot-matrix printer enabling to print a dot-matrix character, graphic patterns at the speed n-times (n is more than 2) higher than a normal printing mode as well as enabling to print at the normal speed printing mode by processing a basic dot matrix of the normal printing mode for generating a dot-matrix of n-times speed printing mode, said printing system comprising:
a means (4, 15) enabling to drive a print head (1) at a speed n-times higher than a normal driving speed;
a dot-matrix generator means (19) for processing the basic dot-matrix to generate a dot-matrix for the n-times speed printing mode in the manner that a non-printing dot is included in the number of at least n-1 in the same row between the printed dot and the next dot to be printed.

2. A printing system for a dot-matrix printer according to claim 1, wherein the dot matrix generator means (19) comprises:
a print data memory (26) for supplying a print data to the print head (1);
shifting means composed of memories in the number of (n-1) for successively shifting output data of said print data memory (26), input and output of each memory (21, 22) being serially connected to each other;
a first arithmetic logic means (23) for executing an operation so that the output data of each memory of said shifting means (21, 22) are ORed; and
a second arithmetic logic means (25) for executing an operation so that a present print data of a basic dot-matrix and a resultant data executed by the first arithmetic logic means (23) are exclusively ORed and the result of the execution is output to said print data memory (26).

Fig. 1  BLOCK DIAGRAM EXPLAINING PRINTING SYSTEM OF THE PRESENT INVENTION

EP 0 331 033 A2

## Fig. 2

BLOCK DIAGRAM OF FIRST
ARITHMETIC LOGIC MEANS

22a

| SECOND DOT PREVIOUS COLUMN PRINT DATA |

23

23a

| OR | → | PREVIOUS PRINT DATA |

21a

| FIRST DOT PREVIOUS COLUMN PRINT DATA |

## Fig. 3

RESULT OF OPERATION EXECUTED
BY FIRST ARITHMETIC LOGIC MEANS

| SECOND DOT PREVIOUS COLUMN PRINT DATA | FIRST DOT PREVIOUS COLUMN PRINT DATA | |
|---|---|---|
| 1 | 1 | 1 |
| 1 | O | 1 |
| O | 1 | 1 |
| O | O | O |

1 · · · PRINT DOT
O · · · NOT-PRINT DOT

# Fig. 4

BLOCK DIAGRAM OF SECOND ARITHMETIC
LOGIC MEANS

20a

PRESENT DATA

23a

PREVIOUS
PRINT DATA

25a

EXOR

25b

AND → PRESENT
PRINT DATA

# Fig. 5

RESULT OF OPERATION EXECUTED
BY SECOND ARITHMETIC LOGIC MEANS

| PREVIOUS PRINT DATA | PRESENT DATA | |
|---|---|---|
| 1 | 1 | O |
| 1 | O | O |
| O | 1 | 1 |
| O | O | O |

1 ... PRINT DOT
O ... NON-PRINT DOT

## Fig. 6(a)
TIME CHART OF OPERATION OF PRINT HEAD
DRIVE CYCLE IN NORMAL PRINTING MODE

① ② ③ ④ ⑤ ⑥ ⑦

DRIVE
NON-DRIVE
PRINT DATA

1    O    1    1    1    1    1

HEAD DRIVE CYCLE
PER ONE DOT

t

## Fig. 6(b)
TIME CHART OF OPERATION OF PRINT HEAD DRIVE
CYCLE IN THREE-TIMES SPEED PRINTING MODE

① ② ③ ④ ⑤ ⑥ ⑦

DRIVE
NON-DRIVE
PRINT DATA

1    O    O    1    O    O    1

HEAD DRIVE CYCLE
PER ONE DOT

$t/3$

EP 0 331 033 A2

Fig. 7    SCHEMATIC VIEW OF DOT-MATRIX PRINTER

Fig. 8    BLOCK DIAGRAM OF CONTROL OF
          DOT-MATRIX PRINTER

## Fig. 9(a)

VIEW SHOWING DOT PATTERN PRINTED BY PRINT HEAD IN NORMAL PRINTING MODE

PRINT HEAD

1 PIN
2 PIN
3
24 PIN

## Fig. 9(b)

VIEW SHOWING DOT PATTERN PRINTED BY PRINT HEAD IN THREE-TIMES SPEED PRINTING MODE

## Fig. 10(a) PRIOR ART

VIEW SHOWING DOT PATTERN
PRINTED BY PRINT HEAD OF
BASIC DOT-MATRIX PRINTER

←|←1/180″

## Fig. 10(b) PRIOR ART

VIEW SHOWING DOT PATTERN PRINTED BY
PRINT HEAD OF DOT-MATRIX PRINTER REDUCED
TO 2/3 IN WHICH PRINTING SPACE IS ENLARGED
FROM 1/180 INCH TO 1/120 INCH

←|←1/120″

1/180″

(A) ① ② ③ ④
OR
(B) ① ② ④

1/120″

# Fig. 10(c) PRIOR ART

## VIEW SHOWING DOT PATTERN PRINTED BY PRINT HEAD IN THREE-TIMES SPEED PRINTING MODE